# EUROPEAN PATENT SPECIFICATION

(11) **EP 0 858 735 B1**
(45) Date of publication and mention of the grant of the patent: **04.07.2001**
(21) Application number: 98200131.5
(22) Date of filing: 19.01.1998
(51) Int. Cl.: A01G 31/06

(54) **Method and device for forcing and harvesting chicory**
Verfahren und Vorrichtung zum Treiben und Ernten von Chicorée
Méthode et dispositif pour le forçage et la récolte de l'endive

(30) Priority: 06.02.1997 NL 1005207
(43) Date of publication of application: 19.08.1998
(73) Proprietor: Stichting Robolof, 1696 AM Oosterblokker (NL)
(72) Inventor: Miedema, Willibrordus Jaring, 1778 KN Westerland (NL)
(74) Representative: Metman, Karel Johannes

(56) References cited:
- EP-A- 0 387 971
- BE-A- 876 872
- FR-A- 2 601 228
- FR-A- 2 618 043
- US-A- 3 935 673
- US-A- 5 042 195

## Description

The present invention relates to a method for advancing and harvesting chicory, in accordance with the preamble of claim 1.

The forcing of chicory, whereby a head is "forced" on a previously grown chicory root takes place under controlled conditions in a forcing room. To this end the roots are placed into so-called forcing trays, which are arranged for accommodating the roots and for passing water containing nutriment for the nourishment of the chicory roots.

Following said forcing the chicory is harvested by separating the head from the root. In practice this is usually done manually by breaking or cutting off the head from the root. It is very important thereby that said separation of the head from the root takes place at the correct height, on the one hand in order to prevent parts of the root remaining attached to the head and on the other hand to prevent the outer leaves becoming detached from the head if said separation takes place too high.

US-A-4,879,840 discloses a method and device for setting out and harvesting chicory by mechanized means, wherein the roots are not handled individually but in groups, which can be treated as units. Several methods of harvesting the chicory are proposed. It is preferred thereby to "beat" the chicory heads from the roots by subjecting the roots to an accelerated movement, followed by an abrupt deceleration. With this method it is necessary to hold the roots with special clamps, however. Other harvesting methods described in the aforesaid patent application use a cutting or shearing element, which is moved along the holder and which separates the heads from the chicory roots, which are placed on pins. It cannot be guaranteed thereby that said cutting off takes place at the correct height.

US-A-5,042,195 discloses a system for cultivating and harvesting bean sprouts using a separating or support elements in the form of an open mesh screen for supporting beans and bean sprouts allowing the bean sprouts to grow without interference from the support elements.

The object of the present invention is to provide a method of the kind referred to in the introduction, which affords a better guarantee that the head is separated from the root at the level of the separating element.

In order to accomplish that objective the method according to the invention is characterized by the features of claim 1.

By using one or more separating elements the head and the root are mechanically separated. The roots are thereby held at the correct level by the separating element during the forcing period, which level can subsequently be used as a reference level during harvesting when cutting or shearing off the heads. In this manner a much greater freedom as regards the use of shearing or cutting elements is obtained, whereby it would also be possible to cut off the heads quickly by hand as well by moving a knife or the like along the separating element.

The invention also comprises a device for forcing and harvesting chicory, said device comprising the features of claim 3. Favourable embodiments are defined in the subclaims.

The invention furthermore comprises a section to be used in such a device, which section comprises two opposing horizontal flanges and one vertical support for forming a section having a T-shaped cross-section, with positioning projections being formed on said support, under said flanges.

The invention will be explained in more detail hereafter with reference to the drawings, which illustrate an embodiment of the device according to the invention.

Fig. 1 is a perspective view of a forcing tray according to the invention, which is filled with full-grown chicory.

Fig. 2 is a larger-scale, very partial cross-sectional view of the forcing tray of Fig. 1, showing chicory roots of varying dimensions comprising offshoots of the chicory head in its initial development stage.

Fig. 3 is a larger-scale, partial plan view of the forcing tray of Fig. 1 with only one chicory root present therein.

Figs. 4 and 5 are sectional views along lines IV-IV and V-V respectively in Fig. 3.

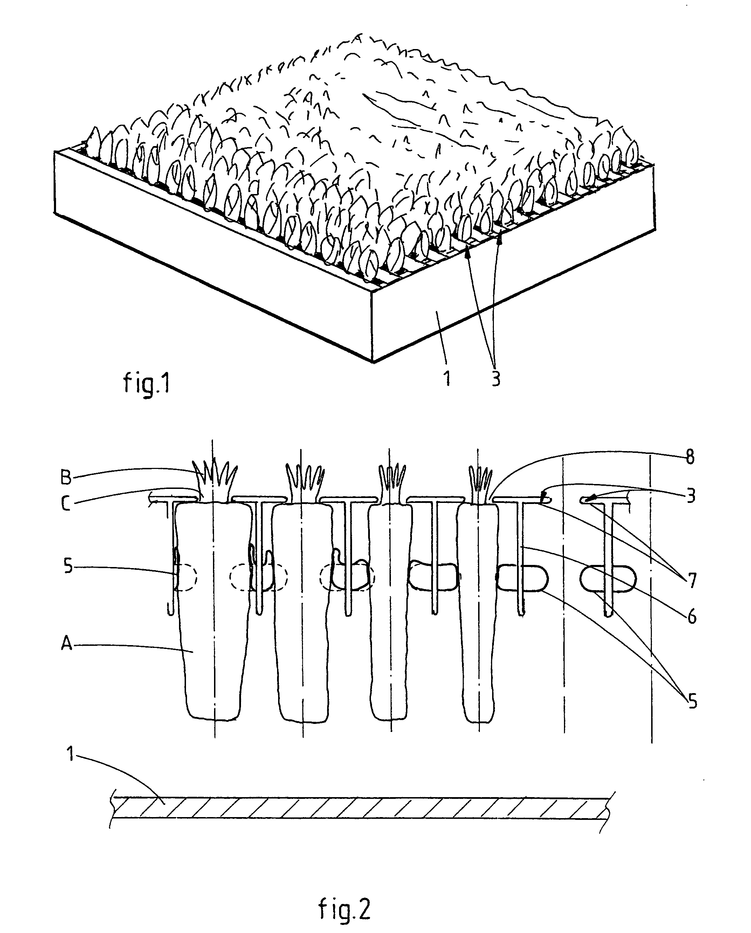

Fig. 1 as a whole is a highly simplified representation of a forcing tray for forcing chicory from chicory roots A. Fig. 1 shows heads B of the chicory, which are already full-grown. The forcing tray comprises a watertight, tray-shaped container 1, which is made of plastic material or of wood with a lining 2 of plastic material. Tray 1 is arranged, in a manner not shown, for receiving and passing water containing nutrients for the chicory roots A, whilst in most cases forcing trays 1 will also be arranged for being stacked together in spaced-apart relationship in a so-called forcing room, where it is dark and which is provided with an air ventilation system as well as with a water circulation system.

Fig. 1 shows that a large number of chicory roots can be accommodated in a forcing tray, in this case arranged in a large number of rows.

Figs. 2 - 5 show that chicory roots A are accommodated between a large number of parallel T-shaped sections 3 extending in transverse direction in the tray, between which chicory roots A are clamped in a manner yet to be described.

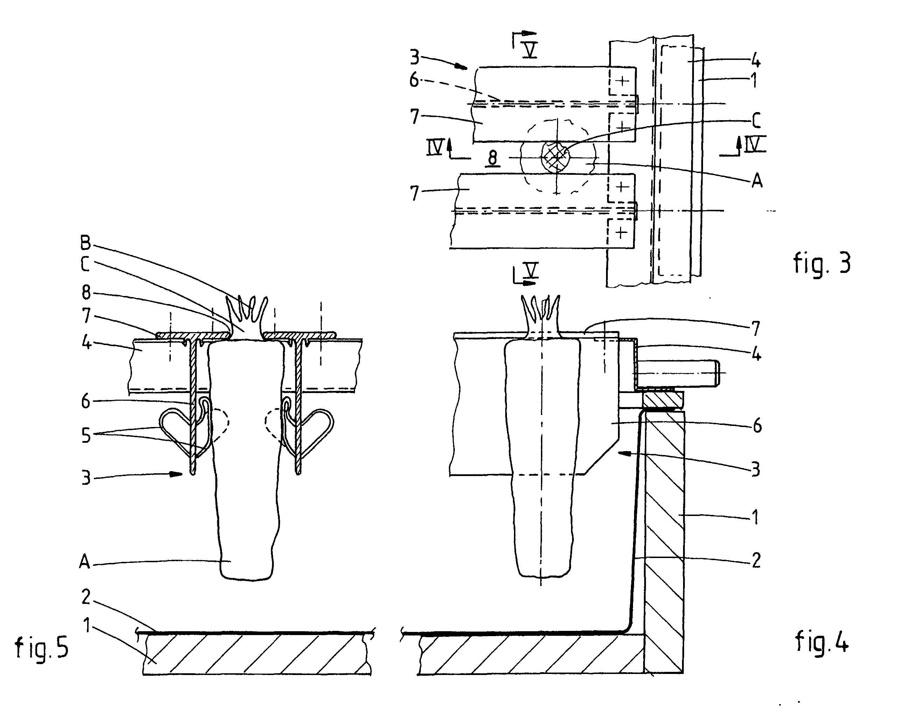

Figs. 3 - 5 show that T-sections 3 are secured to a frame or strip 4 at their ends, in such a manner that a fixed connection is formed between T-sections 3. Strip 4 is supported on the upper edge of tray 1.

Chicory roots A are held between the T-shaped sections 3 by means of positioning elements, in this embodiment in the form of elastically deformable projections 5, which are present on either side of web 6 of T-section 3, which functions as a support. In this embodiment the elastically deformable projections 5 are hollow elastic lips, which may extend the entire length of T-shaped sections 3, or which may be fitted or formed on webs 6 of T-sections 3 in a discrete arrangement. In the illustrated embodiment T-sections 3 and projections 5 have been formed in one piece, for example by co-extrusion, whereby the T-section has been formed from a hard plastic, for example hard PVC (regenerated), and projection 5 has been formed from a thermoplastic rubber. The distance over which projections 5 extend inwardly and by which T-sections 3 are spaced apart is such that the same projections 5 may be used for positioning chicory roots having varying diameters. Fig. 2 shows roots of varying dimensions, in this case having diameters ranging from 30 to 55 mm, whereby all roots are still held sufficiently firmly by projections 5 of T-sections 3. In order to accomplish this, the projections 5 must be deformed to a greater or lesser degree. The projections shown in Figs. 2 and 5 have slightly different cross-sections, whereby the upwardly sloping projections of Fig. 5 have the advantage of offering even greater resistance against a downward force exerted thereon by chicory root A.

This latter point is advantageous when the chicory roots A are permanently positioned at the correct height. The fact is that according to the invention separating elements are provided, which are in this case made up of horizontal flanges 7 of T-sections 3 extending in either direction, against the bottom side of which chicory roots A must be placed in order to position and maintain the upper sides of all chicory roots A at the same level. An interspace or opening 8 is kept between the flanges 7 of adjacent T-sections 3, such that a neck C of a head B of the chicory can pass therebetween, and consequently flanges 7 provide a separation between chicory roots A and the associated heads B. This is highly advantageous when chicory heads B are being harvested, because said heads can be cut off at exactly the level of the upper side of flanges 7, and consequently flanges 7 may be used to guide some type of cutting or shearing element (not shown) for separating heads B from roots A. Thus it is ensured that a fine head is cut off, to which all leaves are firmly attached and which contains as little from the neck or root as possible. This leads to an enhanced quality of the chicory and a saving on labour costs, and/or it provides possibilities for extensive mechanization.

Another advantage of the separation elements is the fact that they assist in maintaining different environment conditions at the level of roots A and heads B. Thus it is advantageous for the growth of the head when the temperature at the level of roots A is higher than at the level of heads B, which will look better when the temperature is low. This separation of the environment conditions leads to a higher return for the grower, to which also an improved supply of water and nutriment to the roots contributes, which roots are suspended in spaced-apart relationship in rows, preferably slightly above the bottom of the forcing tray, and which are thus readily accessible for the nutriment and the water. This arrangement of the roots and the separated environment conditions also leads to a decreased occurrence of diseases.

The placing of the roots between the positioning elements or projections 5 takes place when the grate of T-sections is present as a unit outside tray 1, for example placed upside down or on one side, and the roots are inserted between the T-sections 3 manually or by mechanized means.

From the foregoing it will be apparent that the invention provides a method and a device for forcing and harvesting chicory which leads to an enhanced quality of the chicory, an improved growing efficiency, and a saving on labour costs.

The invention is not limited to the embodiment shown in the drawing and described in the foregoing, which can be varied in several ways within the scope of the invention. Thus the positioning and separating elements may be shaped completely differently and be configured as separate elements. The positioning and separating elements may also be secured to conveying means, in order to be transported to a harvesting place outside the forcing tray after the forcing period. Furthermore the separating elements may possess a separate passage for each chicory head. Furthermore it would be possible to slip the separating elements over the upper side of the chicory roots only just before harvesting, during which operation they can be used as cutting guides.

## Claims

1. A method for forcing and harvesting chicory, wherein chicory roots (A) having tops in the initial development stage are placed into forcing trays (1), and the tops are forced to develop into chicory heads (B) under controlled conditions, after which the heads are separated from the roots by means of a cutting element or the like, **characterized in that** the chicory roots (A) are placed into the forcing trays (1) and are held there by positioning elements (5) such that the roots are placed with the upper side of the root abutting against the bottom side of a separating element (3), and that the head (B) grows through a passage (8) in said separating element, after which the head is separated from the root at the level of the separating element when harvesting takes place.

2. A method according to claim 1, wherein said separating element (3) is used for guiding said cutting element.

3. A device for forcing and harvesting chicory, said device comprising a forcing tray (1) for accommodating a plurality of chicory roots (A) in an upright position and for receiving liquid nutriment for the chicory, whereby the forcing tray is fitted with a number of positioning elements (5) formed on supports (6), which function to hold the chicory roots in the correct position, **characterized in that** the forcing tray (1) is furthermore provided with a substantially horizontally extending separating element (3) at a level above the positioning elements (5), so that the chicory roots (A) can be placed against the bottom side of the separating element, which is provided with passages (8) for the head (B) on the chicory roots.

4. A device according to claim 3, wherein said separating element (3) comprises a number of spaced-apart horizontal flanges (7), which form said passages (8) between them.

5. A device according to claim 3 or 4, wherein said positioning elements (5) are made up of strongly elastically deformable projections, which extend inwardly from said supports (6), which projections are capable of engaging a chicory root (A) in circumferentially spaced-apart places.

6. A device according to claim 5, wherein said projections (5) consist of hollow, rubbery lips.

7. A device according to any one of the claims 3 - 6, wherein said separating elements (3) and said positioning elements (5) are made in one piece, preferably of different materials.

8. A device according to claims 4 and 7, wherein two flanges (7) are formed on each support (6) so as to form an elongated T-shaped section, whereby a number of sections can placed in the container in parallel spaced-apart relationship, and whereby the spaces between the flanges (7) of the adjacent sections function as passages (8) for the chicory head (B).

9. A section (3) to be used in the device according to any one of the claims 3 - 8, said section (3) comprising two opposing horizontal flanges (7) and one vertical support (6) for forming a section having a T-shaped cross-section, with positioning projections (5) being formed on said support, under said flanges.

## Patentansprüche

1. Verfahren zum Züchten und Ernten von Chicory, wobei Chicorywurzeln (A), die ihre Oberteile in dem anfänglichen Entwicklungszustand haben, in Züchtgestelle (1) platziert werden, und die Oberteile unter kontrollierten Bedingungen dazu gebracht werden, sich in Chicory-Köpfe (B) zu entwickeln, wonach die Köpfe von den Wurzeln durch ein Schneidelement oder ähnliches getrennt werden,
dadurch gekennzeichnet, dass
die Chicory-Wurzeln (A) in die Züchtgestelle (1) platziert werden und dort durch Positionierelemente (5) gehalten werden, so dass die Wurzeln mit der oberen Seite der Wurzel anstoßend gegen die Bodenseite eines Trennelements (3) platziert werden, und dass der Kopf (B) durch einen Durchgang (8) in dem Trennelement wächst, wonach der Kopf von der Wurzel auf dem Niveau des Trennelements beim Ernten getrennt wird.

2. Verfahren nach Anspruch 1, wobei das Trennelement (3) zum Führen des Schneidelements verwendet wird.

3. Einrichtung zum Züchten und Ernten von Chicory, wobei die Einrichtung ein Züchtgestell (1) zum Unterbringen einer Vielzahl von Chicory-Wurzeln (A) in einer stehenden Position und zum Aufnehmen flüssiger Nährstoffe für den Chicory umfasst, wobei das Züchtgestell mit einer Anzahl von Positionierelementen (5) eingerichtet ist, die auf Stützen (6) geformt sind, die so wirken, dass sie die Chicory-Wurzeln in der korrekten Position halten, dadurch gekennzeichnet, dass das Züchtgestell (1) weiter mit einem sich im wesentlichen horizontal erstreckenden Trennelement (3) in einem Niveau über dem Positionierelement (5) versehen ist, so dass die Chicory-Wurzeln (A) gegen die Bodenseite des Trennelements platziert werden können, das mit Durchgängen (8) für den Kopf (B) auf den Chicory-Wurzeln versehen ist.

4. Einrichtung nach Anspruch 3, wobei das Trennelement (3) eine Anzahl von beabstandeten horizontalen Flanschen (7) umfasst, die die Durchgänge (8) zwischen ihnen bilden.

5. Einrichtung nach Anspruch 3 oder 4, wobei die Positionierelemente (5) aus stark elastisch deformierbaren Vorsprüngen gemacht sind, die sich nach innen von den Stützen (6) erstrecken, wobei die Vorsprünge mit einer Chicory-Wurzel (A) in bezüglich des Umfangs beabstandeten Orten zusammenwirken können.

6. Vorrichtung nach Anspruch 5, wobei die Vorsprünge (5) aus hohlen Gummilippen bestehen.

7. Vorrichtung nach einem der Ansprüche 3 bis 6, wobei die Trennelemente (3) und die Positionierelemente (5) in einem Stück gefertigt sind, vorzugsweise aus unterschiedlichen Materialien.

8. Einrichtung nach Ansprüchen 4 und 7, wobei zwei Flansche (7) auf jeder Stütze (6) geformt sind, so dass ein länglicher T-förmiger Abschnitt gebildet wird, wobei eine Anzahl von Abschnitten in dem Behälter parallel und beabstandet platziert werden können, und wobei die Abstände zwischen den Flanschen (7) der benachbarten Abschnitte als Durchgänge (8) für den Chicory-Kopf (B) wirken.

9. Abschnitt (3) zur Verwendung in der Einrichtung gemäß einem der Ansprüche 3 bis 8, wobei der Abschnitt (3) zwei gegenüberliegende horizontale Flansche (7) und eine vertikale Stütze (6) zum Bilden eines Abschnitts, der einen T-förmigen Querschnitt hat, umfasst, wobei Positioniervorsprünge (5) auf der Stütze geformt sind, unter den Flanschen.

## Revendications

1. Méthode de forçage et de récolte de l'endive, dans laquelle des racines (A) d'endives ayant une partie aérienne en début de développement sont placées dans des bacs de forçage (1), et les parties aériennes sont forcées pour se transformer en chicons (B) dans des conditions maîtrisées, après quoi les chicons sont séparés des racines à l'aide d'un élément coupant ou analogue,
**caractérisée en ce que** les racines (A) d'endives sont mises dans les bacs de forçage (1) et y sont maintenues par des éléments de positionnement (5) de façon que les racines soient placées avec le haut de la racine en butée contre la face inférieure d'un élément de séparation (3) et que le chicon (B) pousse à travers un passage (8) présent dans ledit élément de séparation, après quoi le chicon est séparé de la racine au niveau de l'élément de séparation lorsque a lieu la récolte.

2. Méthode selon la revendication 1, dans laquelle ledit élément de séparation (3) sert à guider ledit élément coupant.

3. Dispositif pour le forçage et la récolte de l'endive, ledit dispositif comprenant un bac de forçage (1) destiné à contenir plusieurs racines (A) d'endives en position dressée et à recevoir des éléments nutritifs sous forme liquide pour l'endive, le bac de forçage étant pourvu d'un certain nombre d'éléments de positionnement (5) formés sur des supports (6), qui servent à maintenir les racines d'endives dans la bonne position, **caractérisé en ce que** le bac de forçage (1) comporte en outre un élément de séparation (3) sensiblement horizontal à un niveau situé au-dessus des éléments de positionnement (5), de façon que les racines (A) d'endives puissent être placées contre la face inférieure de l'élément de séparation, qui comporte des passages (8) pour le chicon (B) poussant sur les racines d'endives.

4. Dispositif selon la revendication 3, dans lequel ledit élément de séparation (3) comporte un certain nombre d'ailes horizontales (7) espacées les unes des autres, qui forment entre elles lesdits passages (8).

5. Dispositif selon la revendication 3 ou 4, dans lequel lesdits éléments de positionnement (5) sont constitués par des saillies fortement déformables d'une manière élastique, qui s'étendent vers l'intérieur depuis lesdits supports (6), lesquelles saillies sont conçues pour venir contre une racine (A) d'endive à des endroits espacés les uns des autres dans la direction circonférentielle.

6. Dispositif selon la revendication 5, dans lequel lesdites saillies (5) sont constituées par des languettes creuses caoutchouteuses.

7. Dispositif selon l'une quelconque des revendications 3 à 6, dans lequel lesdits éléments de séparation (3) et lesdits éléments de positionnement (5) sont réalisés d'une seule pièce, de préférence en matières différentes.

8. Dispositif selon les revendications 4 et 7, dans lequel deux ailes (7) sont formées sur chaque support (6) afin de former un profilé en T allongé, un certain nombre de profilés pouvant être placés parallèlement les uns aux autres dans le bac, et les espaces entre les ailes (7) des profilés adjacents servant de passages (8) pour le chicon (B) des endives.

9. Profilé (3) à utiliser dans le dispositif selon l'une quelconque des revendications 3 à 8,, ledit profilé (3) comportant deux ailes horizontales opposées (7) et un support vertical (6) pour former un profilé à section transversale en T, des saillies de positionnement (5) étant formées sur ledit support, sous lesdites ailes.
